# EUROPÄISCHE PATENTSCHRIFT

(11) **EP 2 669 904 B1**
(45) Veröffentlichungstag und Bekanntmachung des Hinweises auf die Patenterteilung: **13.03.2024**
(21) Anmeldenummer: 13168937.4
(22) Anmeldetag: 23.05.2013
(51) Int. Cl.: H01F 5/00

(54) **Drehmagnet mit Schenkelfeder**
Rotary magnet with leg spring
Aimant rotatif avec ressort spiral

(30) Priorität: 01.06.2012 DE 102012104782
(43) Veröffentlichungstag der Anmeldung: 04.12.2013
(73) Patentinhaber: SVM Schultz Verwaltungs-GmbH & Co. KG, 87700 Memmingen (DE)
(72) Erfinder: Hasel, Claus-Peter, 87700 Memmingen (DE); Weiß, Bernhard, 87737 Boos (DE)
(74) Vertreter: Patentanwälte Olbricht, Buchhold, Keulertz Partnerschaft mbB

(56) Entgegenhaltungen:
- EP-A1- 0 976 590
- EP-A1- 1 172 579
- EP-A1- 1 452 352
- EP-A2- 0 124 335
- EP-A2- 0 342 733
- DE-A1- 3 644 599
- DE-A1- 4 203 658
- DE-A1- 19 619 074
- DE-B3-102004 040 632
- DE-C2- 4 203 658
- JP-A- 2010 156 347
- US-A- 4 828 235
- US-A1- 2005 168 307
- US-A1- 2010 295 222
- US-A1- 2012 090 951
- US-B1- 6 220 586

## Beschreibung

Die Erfindung betrifft einen Drehmagneten mit einer Schenkelfeder, als rückstellendes Mittel zwischen zwei zueinander um eine Drehachse verdrehbaren Elementen, wobei die Schenkelfeder in ihren Endbereichen mit dem jeweiligen Element verbindbar ist, sich die Bindungen um eine Federachse herum erstrecken und durch eine Verdrehung um die Federachse belastbar sind.

Schenkelfedern sind bekannt und weisen in der Regel einen zylindrischen Aufbau auf. Dieser Aufbau erweist sich im Betrieb der mit einer derartigen Schenkelfeder ausgerüsteten Vorrichtungen als nachteilig. Schenkelfedern mit zylindrischem Aufbau weisen einen undefinierten (d.h. im Betrieb nicht mit hinreichender Güte reproduzierbarem Verhalten) Verlauf der Federkennlinie, eine hohen Reibung der Windungen bei Torsionsbeaufschlagung und/oder eine große Hysterese auf.

Der zylindrische Aufbau führt darüber hinaus zu einer undefinierten Einbaulage der Feder.

In der Einbausituation ist nicht selten ein in den durch die Windungen der Feder gebildeten Raum einragender Zentrierdurchmesser an einem um eine Drehachse verdrehbaren Element vorgesehen. Kommt es zur Verdrehung der Feder, kann es aufgrund des zylindrischen Aufbaus der Kantenschenkelfedern zu einem Überschnappen der Windungen am Zentrierdurchmesser kommen. Dies führt auch zu einem als ungünstig und nachteilig angesehenen Verlauf der Federkennlinie und geht mit einer erhöhten Reibung im Bereich des Zentrierdurchmessers einher.

Bekannte, einen zylindrischen Aufbau aufweisende Schenkelfedern sind somit mit einer Vielzahl von Nachteilen behaftet.

Das Dokument DE 10 2004 040 632 B3 offenbart als zylinderförmige Schraubenfedern ausgeführte Drehfederelemente, wobei Windungen unterschiedlicher Durchmesser vorhanden sind.

Das Dokument US 6 220 586 B1 offenbart eine Drehfeder, welche einen mittig größeren Durchmesser aufweist.

Das Dokument EP 1 172 579 A1 offenbart eine Torsionsfeder zum Ausgleich von Gewichtskräften, welche einen außenseitig verringerten Durchmesser aufweist.

Das Dokument US 2010/295222 A1 offenbart einen Aktuator mit einer Springfeder, deren Federarme integral mit dem Aktuator ausgeführt sind.

Das Dokument US 4 828 235 A offenbart eine Drehfederanordnung, welche zur Verwendung in einem Drosselventil angepasst ist. Ein elektromagnetisch betätigter Drehmagnet ist auch in EP 0 342 733 A2 offenbart.

Aufgabe der vorliegenden Erfindung ist es, einen Drehmagneten mit einer Schenkelfeder als rückstellendes Mittel zwischen zwei zueinander um eine Drehachse verdrehbaren Elementen zur Verfügung zu stellen und zumindest einen der vorgenannten Nachteile zu vermeiden.

Die Aufgabe wird durch einen elektromagnetischen Drehmagneten gelöst, wie er in Anspruch 1 definiert ist.

Die Veränderung des Windungsdurchmessers bleibt hierbei nicht auf einzelne Windungen beschränkt. Vielmehr besteht die Möglichkeit, dass zwei Windungen mit gleichem Durchmesser vorgesehen sind, die als Zentrierwindungen an dem in die Feder einstehenden Zentrierdurchmesser des zu verdrehenden Elementes anliegen. Durch die Drehbewegung wird dabei das Anliegen der Windungen verstärkt und ein Überschnappen der tordierten Windungen am Zentrierdurchmesser verhindert. Eine solchermaßen ausgebildete Schenkelfeder weist einen definierten Verlauf der Federkennlinie auf. Darüber hinaus zeigen derartige Schenkelfedern nur eine minimale Hysterese und minimierte Reibung. Die am Zentrierdurchmesser anliegende Windung beziehungsweise ein Windungspaar ist dabei zylindrisch angelegt, während dann die nachfolgenden Windungen einen sich zumindest abschnittsweise verändernden Windungsdurchmesser aufweisen. Als günstig wird angesehen, wenn der Windungsdurchmesser des zwischen den Endbereichen der Schenkelfeder angeordneten Mittelbereichs im unbelasteten Zustand der Schenkelfeder zumindest abschnittsweise unterschiedlich ist, vom Durchmesser der Windung beziehungsweise Windungen in zumindest einem Endbereich. Hierbei kann auch ein Anteil an zylindrisch ausgebildeten Windungen beziehungsweise Windungsgruppen vorgesehen werden. Dies bedeutet, die Schenkelfeder weist im Bereich des Zentrierdurchmessers beziehungsweise an der Zentrierwindung beziehungsweise den Zentrierwindungen einen zunächst zylindrischen Aufbau auf, an diesen Schenkelfederbereich schließen sich dann Windungen mit sich schrittweise oder abschnittsweise veränderndem Durchmesser an, die dann in einen Bereich von zylindrischen Windungen übergehen. An den Bereich mit zylindrischen Windungen im beispielsweise Mittelbereich der Schenkelfeder schließen sich dann wiederum Windungen an, deren Durchmesser sich zumindest abschnittsweise verändert. Letztendlich kann sich auch an diese Windungen wieder ein Bereich zylindrischer Windungen anschließen, der den Endbereich der Schenkelfeder bildet und mit dem gegenüber dem ersten Element verdrehbaren zweiten Element verbindbar ist.

Als vorteilhaft wird angesehen, wenn die Änderung des Windungsdurchmessers insbesondere auch im Zusammenwirken mit der Steigung der schrauben-oder spiralförmig angeordneten Windungen so gewählt ist, dass sich zwischen den einzelnen Windungen ein Spalt ergibt, der auch im belasteten Zustand der Schenkelfeder bestehen bleibt. Durch diese bevorzugte Ausführungsform der Schenkelfeder wird die Reibung zwischen den Windungen weiter verringert und damit insgesamt der Verschleiß der Zentrierfeder und die Hysterese weiter verringert. Die Windungen berühren sich auch im tordierten Zustand nicht.

Die Schenkelfeder zeichnet sich insbesondere durch einen bezüglich der Länge der Schenkelfeder im wesentlichen symmetrischen Aufbau aus, wobei sich im Bereich der Symmetrieachse die Windungen mit dem größten oder kleinsten Windungsdurchmesser befinden. Das heißt, ausgehend von einem den Zentrierdurchmesser umschließenden beziehungsweise einen beispielsweise zylindrischen Windungsbereich bildenden Abschnitt der Schenkelfeder schließt sich ein Abschnitt mit zunehmendem beziehungsweise abnehmendem Windungsdurchmesser an. Dieser geht schließlich über in einen symmetrisch ausgeführten Mittelbereich, an den sich wiederum ein dem ersten umfangsbeziehungsweise durchmesserveränderbaren entsprechender Bereich anschließt, der wiederum in einen mit dem jeweiligen zu verdrehenden Element in Eingriff bringbaren und an diesen durchmessermäßig angepassten Bereich übergeht.

Eine weitere bevorzugte Ausführungsform der Schenkelfeder sieht vor, dass in mindestems einem Endbereich und/oder im Mittelbereich mindestens eine Windung mit konstantem Durchmesser vorgesehen ist.

Eine weitere alternative bevorzugte Ausführungsform der Schenkelfeder sieht vor, dass sich der Windungsdurchmesser im Mittelbereich kontinuierlich verändert, die Feder somit einen sich aufweitenden oder eingeschnürten Mittelbereich aufweist.

Der Endbereich der Schenkelfeder beziehungsweise beide Endbereiche der Schenkelfeder weisen günstigerweise ein Verbindungselement auf, das zum zumindest kraft- beziehungsweise momentschlüssigen Verbinden der Schenkelfeder mit dem jeweiligen Element dient. Das Verbindungselement kann dabei direkt durch den Endbereich, das heißt, aus der Feder heraus gebildet werden oder aber an diesem angeordnet oder befestigt sein.

Das Verbindungselement ist dabei bevorzugt durch eine im wesentlichen in Richtung der Federachse weisende Abwinkelung des die Schenkelfeder bildenden Materials gebildet. Diese Abwinkelung kann bereits bei der Wicklung der Schenkelfeder berücksichtigt werden und als Befestigungspunkt eines die Feder bildenden Federbandmaterials vorgesehen werden.

Eine alternative bevorzugte Ausführungsform der Schenkelfeder sieht vor, dass das Verbindungselement durch eine radial zur Richtung der Federachse oder eine schräg verlaufende Abwinkelung des die Schenkelfeder bildenden Materials gebildet ist. Auch diese bevorzugte Ausführungsform kann bereits beim Herstellen beziehungsweise Wickeln der Schenkelfeder hergestellt beziehungsweise in das Federbandmaterial oder den Federdraht eingebracht werden.

Als günstig wird angesehen, wenn die Schenkelfeder aus Federdraht oder Federbandmaterial gebildet ist. Dieser Federdraht beziehungsweise das Federbandmaterial weist dabei einen gleichbleibenden Materialdurchmesser beziehungsweise Materialquerschnitt auf und zeigt auch bei mehrfacher Torsionsbeaufschlagung geringe Hystereseneigung.

Es wird als vorteilhaft angesehen, wenn sich im Mittelbereich der Windungsdurchmesser kontinuierlich verändert. Eine weitere bevorzugte Ausführungsform der Schenkelfeder wird dadurch erreicht, dass im Mittelbereich in Richtung der Federachse der Windungsdurchmesser zu- oder abnimmt. Hieraus ergibt sich eine im wesentlichen konische Ausgestaltung der gesamten Schenkelfeder. Alternativ hierzu besteht die Möglichkeit, dass die Schenkelfeder zunächst zu einem Mittelbereich hin konisch zuläuft, um sich danach wiederum konisch zum zweiten Endbereich hin zu erweitern. Die Schenkelfeder kann somit einen kegelstumpf- oder doppelkegelförmigen geometrischen Aufbau aufweisen.

Eine als günstig angesehene Ausführungsform sieht vor, dass im Mittelbereich in Richtung der Federachse der Windungsdurchmesser in einem ersten Abschnitt zunimmt und in einem zweiten Abschnitt abnimmt.

Sämtliche der vorgenannten Veränderungen des Windungsdurchmessers bewirken zum einen eine bessere Einpassbarkeit der Schenkelfeder in den zwischen den zu verdrehenden Elementen vorgesehenen Zwischenraum beziehungsweise zur Anpassung an ein die zu verdrehenden Elemente aufweisendes Gehäuse. Darüber hinaus kann durch eine entsprechende Formgebung der Schenkelfeder beziehungsweise der im Mittelbereich der Schenkelfeder vorgesehenen Windungen die Federkennlinie entscheidend beeinflusst werden. Auch wird so eine Einstellung des Torsionsverhaltens und der zur Verfügung gestellten Federkräfte beziehungsweise des Federkraftverlaufs einstellbar.

Der Drehmagnet besteht aus einem um eine Drehachse drehbar gelagerten Drehanker und einem im Drehmagnet ortsfest angeordneten, eine Vielzahl von mit elektrischem Strom beaufschlagbaren Wicklungen tragenden Spulenkörper. Der Drehanker ist gegenüber dem Spulenkörper drehbar in einem den Spulenkörper sowie den Drehanker aufnehmenden Gehäuse gelagert. Bei Strombeaufschlagung wird der Drehanker gegen das rückstellende Moment einer wie zuvor ausgeführten Schenkelfeder verdreht. Das rückstellende Moment der Schenkelfeder wird dabei beeinflusst durch die letztendliche Wicklungsgeometrie beziehungsweise die unterschiedlichen Winkeldurchmesser, die bei der Herstellung der Schenkelfeder in diese eingebracht worden sind.

In der Zeichnung ist die Erfindung insbesondere in einem Ausführungsbeispiel schematisch dargestellt. Es zeigen:
Fig. 1 eine Schnittdarstellung einer bevorzugten Ausführungsform des erfindungsgemäßen Drehmagneten;
Fig. 2a und 2b weitere bevorzugte Ausführungsformen des erfindungsgemäßen elektromagnetisch betätigten Drehmagneten, ebenfalls in Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

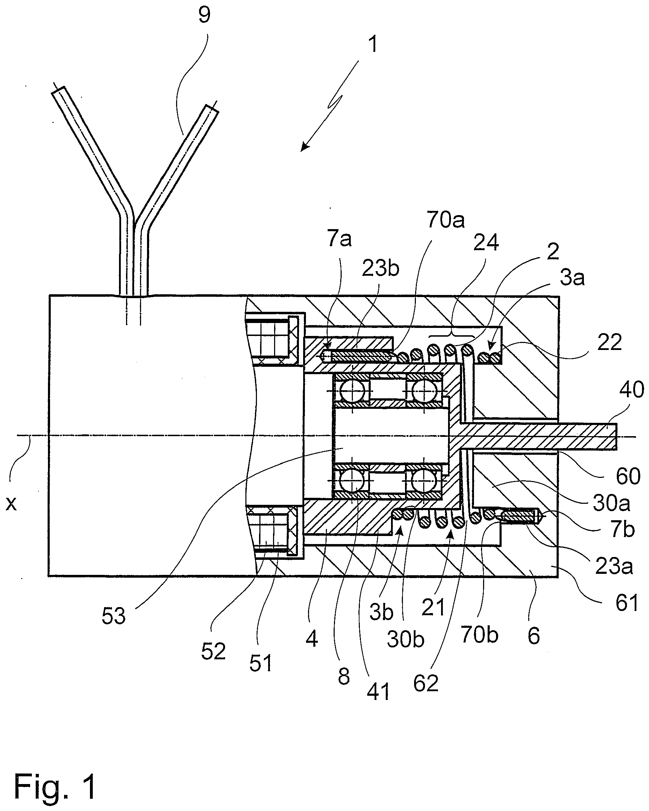

Fig. 1 zeigt eine bevorzugte Ausführungsform des erfindungsgemäßen Drehmagneten 1. Dieser besteht aus einem um eine Drehachse X drehbar gelagerten Drehanker 4 und einem im Drehmagnet 1 ortsfest angeordneten, eine Vielzahl von mit elektrischem Strom beaufschlagbaren Wicklungen 52 tragenden Spulenkörper 51. Bei Strombeaufschlagung wird der Drehanker 4 gegen das rückstellende Moment der Schenkelfeder 2 verdreht.

Der Drehanker 4 ist hierzu gegenüber dem Spulenkörper 51 drehbar in einem den Spulenkörper 51 sowie den Drehanker 4 aufnehmenden Gehäuse 6 gelagert. Die Lagerung erfolgt über in einer napfartigen Ausnehmung des Drehankers 4 angeordnete Lager 8. Der Spulenkörper 51 weist einen in den Drehanker 4 einstehenden Fortsatz 53 auf, der das Lager 8 trägt. Der Drehanker 4 weist zudem eine Ankerstange 40 auf, die eine im Gehäuse 6 vorgesehene Austrittsbohrung 60 durchragt und mit einem durch den Drehmagnet 1 betätigten Gerät (nicht dargestellt) verbunden werden kann. Die Schenkelfeder 2 weist mehrere Windungen 21 auf, deren Windungsdurchmesser in Richtung der mit der Drehachse X des Drehmagneten 1 koaxial verlaufenden Federachse zumindest abschnittsweise sich verändert. Die Schenkelfeder 2 weist insgesamt zwei Bereiche mit zylindrisch ausgeführten Windungen 22 auf. Diese finden sich in den Endbereichen 3a, 3b der Schenkelfeder 2 und liegen unmittelbar an einem Zentrierbereich 30a im ortsfest ausgeführten Gehäuse 6 sowie einem zweiten Zentrierbereich 30b am drehbar gelagerten Drehanker 4 an. Ausgehend von dem Abschnitt der Schenkelfeder 2 der als zylindrische Windungen 22 ausgeführt ist, weitet sich der Windungsdurchmesser zu einem Mittelbereich 24 der Schenkelfeder 2 hin auf und bildet im Ausführungsbeispiel der Fig. 1 einen, wiederum durch zylindrische Windungen gebildeten, Mittelbereich 24 der Schenkelfeder. Zum zweiten Endbereich 3a der Schenkelfeder 2, die in dem Zentrierbereich 30a im Gehäuse 6 des Drehmagneten 1 angeordnet ist, nimmt der Windungsdurchmesser wiederum ab und es sind hier wiederum zylindrische Windungen 22 ausgebildet, die mit dem Zentrierbereich 30a in Eingriff stehen. Der Zentrierbereich 30a ist im Ausführungsbeispiel der Fig. 1 in dem Gehäuse 6 beziehungsweise dem Gehäuseboden 61 eingeformt und erstreckt sich in Richtung des Spulenkörpers 51. Zwischen dem aus dem Gehäuseboden 61 gebildeten Zentrierbereich 30a und dem Drehanker 4 ist ein Spalt 62 vorgesehen. Dieser wird durch die Schenkelfeder 2 beziehungsweise den Mittelbereich 24 der Schenkelfeder 2 überspannt.

Bei Strombeaufschlagung der Wicklungen 52 bildet sich ein magnetisches Feld aus, das eine Verdrehung des Drehankers 4 bewirkt. Hierdurch erfolgt eine Torsionsbeaufschlagung der Schenkelfeder 2 und es wird ein rückstellendes Moment in die Schenkelfeder 2 eingetragen. Nach Ende der Strombeaufschlagung bewirkt dieses rückstellende Moment eine Rückdrehung des Drehankers 4 in die Ausgangsposition.

In den Endbereichen 3a,b der Schenkelfeder 2 sind Schenkel 23a,b vorgesehen, die die Verbindungselemente zum kraft- beziehungsweise momentschlüssigen Verbinden der Schenkelfeder 2 mit einerseits dem Drehanker 4, andererseits dem Gehäuse 6 herstellen. Zur Anordnung der Schenkelfeder 2 beziehungsweise der daran angeordneten Schenkel 23a,b weist der Drehanker 4 eine Aufnahme 7a auf. Diese ist durch eine Bohrung 70a, die sich koaxial zur Drehachse X in den Ankerkörper 41 erstreckt, gebildet. Die Bohrung 70a ist hierbei als Sacklochbohrung ausgeführt. Der Schenkel 23b ergibt sich durch Abwinkelung der untersten Windung 21 der Schenkelfeder 2 in Richtung der Drehachse X.

Dem ersten Schenkel 23b der Schenkelfeder 2 gegenüberliegend, parallel zum ersten Schenkel 23b ausgerichtet, weist die Schenkelfeder 2 einen zweiten Schenkel 23a auf, der wiederum eine kraft- beziehungsweise momentschlüssige Festlegung der Schenkelfeder 2 im Gehäuse 6 des Drehmagneten 1 ermöglicht. Auch der zweite Schenkel 23a ist durch eine Abwinkelung der untersten, das heißt letzten Windung der Schenkelfeder 2 gebildet. Das Gehäuse 6 weist in seinem Gehäuseboden 61 ebenfalls eine Aufnahme 7b auf, die durch eine Bohrung 70b gebildet ist. In diese wird der Schenkel 23a eingesetzt und damit die Schenkelfeder 2 im Drehmagneten 1 befestigt.

Um eine Strombeaufschlagung der Wicklungen 52 des Spulenkörpers 51 durchführen zu können, weist der Drehmagnet 1 insgesamt zwei Anschlüsse 9 auf. Für den Anschluss des Drehmagneten 1 an ein Gerät ist im Gehäuseboden 61 eine Austrittsbohrung 60 vorgesehen, durch die eine mit dem Drehanker 4 verbundene Ankerstange 40 aus dem Gehäuse 6 ausgeführt wird. Im Ausführungsbeispiel der Fig. 1 stellt das Gehäuse 6, das heißt, das den Spulenkörper 51 sowie den magnetischen Teil des Drehmagneten 1 aufnehmende Gehäuse 6, einen feststehenden Teil dar, gegenüber dem der Drehanker 4 als verdrehbares Element vorgesehen ist.

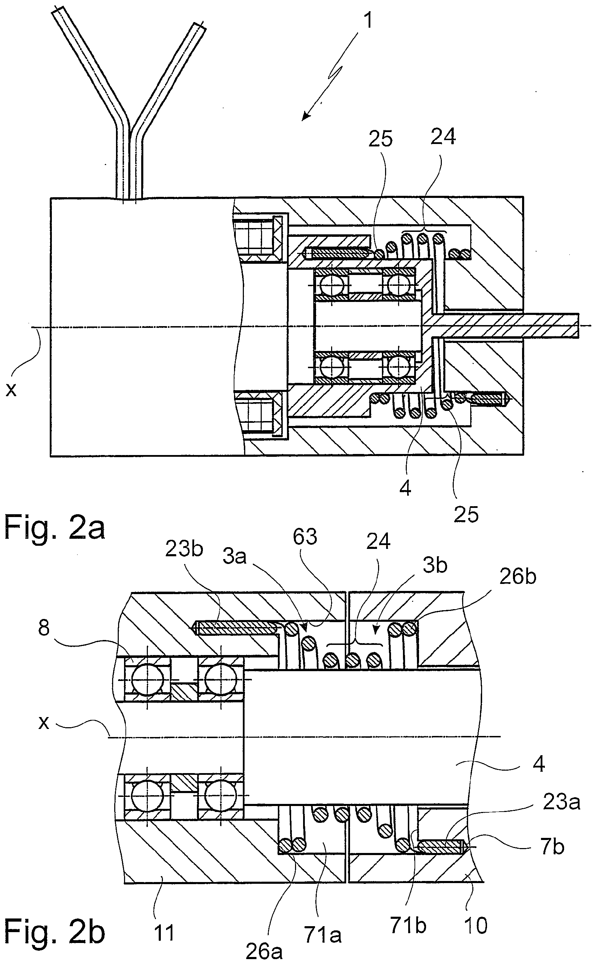

Eine vergleichbare Ausführungsform wird durch die Fig. 2a gezeigt. In Fig. 2a entsprechen die Elemente des Drehmagneten 1 denen der Fig. 1. Für eine Erläuterung der Funktion wird daher auf die Ausführungen zur Fig. 1 verwiesen. Anders als in Fig. 1 ist die Geometrie der Schenkelfeder 2 abweichend ausgeführt. Die Windungen 21 im Mittelbereich 24 der Schenkelfeder 2 weisen einen größeren Abstand zum Drehanker 4 auf. Über den Windungsdurchmesser besteht die Möglichkeit, die Federkennlinie an die entsprechenden Verwendungszwecke des Drehmagneten 1 anzupassen. Gleichzeitig kann auch bei einer Torsion der Schenkelfeder 2 der Abstand zum Drehanker 4 aufrecht erhalten bleiben, so dass hier keinerlei Reibung zwischen dem Drehanker 4 und der Schenkelfeder 2 auftritt. Aufgrund der beabstandeten Anordnung der Windungen 21 relativ zum Drehanker 4 kommt es auch nicht zu einem sogenannten Überschnappen der tordierten Windungen. Die zylindrisch ausgeführten Windungen 22 in den Zentrierbereichen 30a,b des Drehankers 4 beziehungsweise des Gehäuses 6 sind in ihrem Durchmesser auf den Durchmesser der die diese Zentrierwindungen aufnehmenden Bereiche des Drehankers beziehungsweise des Gehäuses abgestimmt und liegen hier eng an. Auch bei einem Verdrehen des Drehankers 4 wird durch die Drehbewegung das Anliegen dieser Windungen 22 an dem Zentrierbereich 30a,b verstärkt und ein Überschnappen der tordierten Windungen am Zentrierdurchmesser verhindert. Ausgehend vom Zentrierbereich 30a weiten sich die Windungen 21 auch im Ausführungsbeispiel der Schenkelfeder 2, wie in Fig. 2a gezeigt, auf und bilden somit eine insgesamt konische Ausgestaltung der Schenkelfeder 2. Die konischen Windungen 25 gehen auch im Ausführungsbeispiel der Fig. 2 über in zylindrische Windungen 22 eines Mittelbereiches 24 der Schenkelfeder 2, um dann, aufgrund einer weiteren Ausbildung zumindest einer konischen Windung 25, wieder in einen zylindrischen Endbereich 3b mit zylindrischen Windungen 22 der Schenkelfeder 2 auszulaufen. Dieser Endbereich 3b der Schenkelfeder 2 weist ebenfalls wieder zylindrische Windungen 22 auf, die in formschlüssiger Verbindung mit dem Zentrierbereich 30b am Drehanker 4 stehen.

Auch in Fig. 2a ist nur ein verdrehbares Element, der Drehanker 4, vorgesehen. Im übrigen verbleiben die restlichen Elemente des Drehmagneten ortsfest.

Fig. 2b zeigt eine weitere bevorzugte Ausführungsform des erfindungsgemäßen Drehmagneten. Die Schenkelfeder 2 weist im Ausführungsbeispiel der Fig. 2b einen Mittelbereich 24 auf, der gegenüber den Endbereichen 3a, 3b einen reduzierten Durchmesser aufweist. Auch in Fig. 2b weist der Drehmagnet einen Drehanker 4 auf, der über ein Lager 8 mit dem das zweite Element des Drehmagneten 1 bildenden, in Fig. 2b nur teilweise dargestellten Spulenkörper 51 verbunden ist. Der Drehanker 4 ist mit einem verdrehbaren Element 10 verbunden. Die Schenkelfeder 2, beziehungsweise deren Schenkel 23b, ist in einer Aufnahme 7b in dem Element 10 eingesetzt. Die Zentrierwindungen 26a,b der Schenkelfeder 2 weisen einen gegenüber den Windungen 21 im Mittelbereich 24 der Schenkelfeder 2 einen größeren Durchmesser auf und liegen an den Wandungen 63 einer topfartig ausgeführten Ausnehmung 71 einerseits in dem Spulenkörper 51 aufnehmenden ersten Element 11, andererseits in einer den gleichen Durchmesser aufweisenden zweiten Ausnehmung 71b in dem zweiten Element 10 an.

Auch die in Fig. 2b dargestellte Schenkelfeder 2 weist einen im wesentlichen symmetrischen Aufbau auf. Anders als in den in den Fig. 1 und 2a gezeigten Schenkelfedern sind hier die Windungen 21 mit dem kleinsten Windungsdurchmesser nicht in den Endbereichen 3a,b der Schenkelfeder 2 vorgesehen, sondern im Mittelbereich 24. Die Position der Aufnahmen 7a,b für die Schenkel 23a,b der Schenkelfeder 2 sind der Ausgestaltung der Schenkelfeder 2 entsprechend in den zwei zueinander um eine Drehachse X verdrehbaren Elementen 10, 11 positioniert.

Neben dem in den Ausführungsbeispielen dargestellten symmetrischen Aufbau der Schenkelfeder 2 besteht selbstverständlich auch die Möglichkeit, dass die gesamte Schenkelfeder einen konischen Aufbau aufweist, das heißt, von einem ersten Endbereich 3a ausgehend, der Durchmesser der Windungen 21 bis zu einem zweiten Endbereich 3b kontinuierlich ab - beziehunsgweise kontinuierlich zunimmt. Nicht vorgesehen ist der mit Nachteilen behaftete zylindrische Aufbau der kompletten Schenkelfeder 2, der mit den eingangs beschriebenen Nachteilen einhergeht.

Mit der in den Fig. 1 sowie 2a und 2b gezeigten Schenkelfeder 2 kann eine klare Definition der Federkennlinie durch entsprechende Anpassungen der Windungsdurchmesser durchgeführt werden. Die Reibung der Feder während der Dreh- beziehungsweise Torsionsbewegung wird minimiert, ebenso wie die Hysterese der Feder. Die wie in den Ausführungsbeispielen ausgeführten Schenkelfedern vermeiden zudem ein Überschnappen der tordierten Windungen im Zentrierbereich 30a,b, dadurch Drehbewegung der Elemente 10, 11, die Zentrierwindungen 26, die im Zentrierbereich 30a,b angeordnet sind beziehungsweise diesen übergreifen, liegen bei Torsion der Feder enger an dem Bereich an und halten die Schenkelfeder beziehungsweise deren Endbereiche 3a,b in der entsprechenden Position, vermeiden jedoch gleichzeitig ein Abrutschen beziehungsweise Überschnappen über die Zentrierbereiche 30a,b. Aufgrund der Möglichkeit, eine Variation der Windungsdurchmesser durchzuführen, kann die Federgeometrie optimal an die Bedingungen am Einbauort der Schenkelfeder 2, beispielsweise in einem Drehmagnet 1, angepasst werden.

Die Schenkelfeder 2 weist neben den schrauben- oder spiralförmig ansteigenden Windungen auch zylindrische Windungen mit gleichem Durchmesser auf. Selbstverständlich besteht auch hier die Möglichkeit, dass keine Windungen mit zylindrischem Durchmesserverlauf beziehungsweise mit zylindrischer Windungsgeometrie vorgesehen werden und stattdessen Steigung der schrauben- oder spiralförmig angeordneten Windungen von einem ersten Endbereich 3a der Schenkelfeder 2 zu einem zweiten Endbereich 3b der Schenkelfeder 2 kontinuierlich zunimmt beziehungsweise abnimmt oder aber, nach einer Zunahme des Durchmessers, eine Abnahme vorgesehen ist. Die Schenkelfeder 2 ist aus Federdraht oder Federbandmaterial mit bevorzugt gleichbleibendem Materialdurchmesser beziehungsweise Materialquerschnitt gebildet.

Die jetzt mit der Anmeldung und später eingereichten Ansprüche sind ohne Präjudiz für die Erzielung weitergehenden Schutzes. Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Die vorliegenden Erfindung ist nicht beschränkt durch die vorangehenden Ausführungsformen, sondern nur durch den Schutzumfang der vorliegenden Anspüche.

## Patentansprüche

1. Elektromagnetisch betätigter Drehmagnet (1), bestehend aus einem um eine Drehachse (X) drehbar gelagerten Drehanker (4) und einem im Drehmagnet (1) ortsfest angeordneten, eine Vielzahl von mit elektrischem Strom beaufschlagbaren Wicklungen (52) tragenden Spulenkörper (51), wobei der Drehanker (4) gegenüber dem Spulenkörper (51) drehbar in einem den Spulenkörper (51) sowie den Drehanker (4) aufnehmenden Gehäuse (6) gelagert ist, wobei bei Strombeaufschlagung der Drehanker (4) gegen das rückstellende Moment einer Schenkelfeder (2) verdreht wird; wobei die Schenkelfeder (2), als rückstellendes Mittel zwischen zwei zueinander um eine Drehachse verdrehbaren Elementen, nämlich dem Drehanker (4) und dem Gehäuse (6), ausgeführt ist, wobei die Schenkelfeder (2) in ihren Endbereichen mit dem jeweiligen Element verbunden ist und sich die Windungen um eine Federachse (x) herum erstrecken und durch eine Verdrehung um die Federachse (x) belastbar sind, wobei sich im unbelasteten Zustand der Schenkelfeder (2) der Windungsdurchmesser der einzelnen Windungen (21) in Richtung der Federachse (x) zumindest abschnittsweise verändert, wobei im belasteten und unbelasteten Zustand der Schenkelfeder (2) ein Spalt (62) zwischen den einzelnen Windungen (21) besteht, und wobei zylindrisch ausgeführte Zentrierwindungen (22) in Zentrierbereichen (30a,30b) des Drehankers (4) beziehungsweise des Gehäuses (6) vorgesehen sind, wobei sich die Zentrierwindungen (22) in den Endbereichen (3a, 3b) der Schenkelfeder (2) befinden und in ihrem Durchmesser auf den Durchmesser der diese Zentrierwindungen (22) aufnehmenden Bereiche einerseits des Drehankers (4) und andererseits des Gehäuses (6) abgestimmt sind und hier anliegen.

2. Drehmagnet (1) nach Anspruch 1, wobei der Windungsdurchmesser des zwischen den Endbereichen (3a,b) der Schenkelfeder (2) angeordneten Mittelbereiches (24) im unbelasteten Zustand der Schenkelfeder (2) zumindest abschnittsweise unterschiedlich ist vom Durchmesser der Windung (21) beziehungsweise Windungen (21) in zumindest einem Endbereich (3a,b).

3. Drehmagnet (1) nach einem der vorhergehenden Ansprüche, wobei die Schenkelfeder (2) einen bezüglich der Länge der Schenkelfeder (2) im wesentlichen symmetrischen Aufbau aufweist, wobei sich im Bereich einer Symmetrieachse die Windungen (21) mit dem größten oder kleinsten Windungsdurchmesser befinden.

4. Drehmagnet (1) nach einem der vorhergehenden Ansprüche, wobei im mindestens einen Endbereich (3a,b) und/oder im Mittelbereich (24) der Schenkelfeder (2) mindestens eine Windung (21) mit konstantem Durchmesser vorgesehen ist.

5. Drehmagnet (1) nach einem der vorhergehenden Ansprüche, wobei sich im Mittelbereich (24) der Schenkelfeder (2) der Windungsdurchmesser kontinuierlich verändert.

6. Drehmagnet (1) nach einem der vorhergehenden Ansprüche, wobei der Endbereich (3a,b) der Schenkelfeder (2) ein Verbindungselement zum zumindest kraft- beziehungsweise momentschlüssigen Verbinden der Schenkelfeder (2) mit dem Drehanker (4) und dem Gehäuse (6) bildet, aufweist oder trägt.

7. Drehmagnet (1) nach Anspruch 6, wobei das Verbindungselement gebildet ist durch eine im Wesentlichen in Richtung der Federachse weisende Abwinkelung des die Schenkelfeder (2) bildendenden Materiales.

8. Drehmagnet (1) nach einem der Ansprüche 6 oder 7, wobei das Verbindungselement durch eine radial zur Richtung der Federachse oder eine schräg verlaufende Abwinkelung des die Schenkelfeder bildenden Materials gebildet ist.

9. Drehmagnet (1) nach einem der vorhergehenden Ansprüche, wobei die Schenkelfeder (2) aus Federdraht oder Federbandmaterial mit gleich bleibendem Materialdurchmesser beziehungsweise Materialquerschnitt gebildet ist.

10. Drehmagnet (1) nach einem der vorhergehenden Ansprüche, wobei im Mittelbereich (24) der Schenkelfeder (2) in Richtung der Federachse der Windungsdurchmesser zu- oder abnimmt.

11. Drehmagnet (1) nach einem der vorhergehenden Ansprüche, wobei im Mittelbereich (24) der Schenkelfeder (2) in Richtung der Federachse der Windungsdurchmesser in einem ersten Abschnitt zunimmt und in einem zweiten Abschnitt abnimmt.

## Claims

1. Electromagnetically actuated rotary solenoid (1) consisting of a rotary armature (4), which is mounted so as to be rotatable about an axis of rotation (X), and a coil former (51), which is arranged in a positionally fixed manner in the rotary solenoid (1) and carries a multiplicity of windings (52) to which electric current is able to be applied, wherein the rotary armature (4) is mounted in a housing (6), which accommodates the coil former (51) and the rotary armature (4), so as to be rotatable in relation to the coil former (51), wherein, when current is applied, the rotary armature (4) is rotated counter to the restoring moment of a leg spring (2); wherein the leg spring (2) is configured as a restoring device between two elements which are rotatable about an axis of rotation in relation to one another, specifically the rotary armature (4) and the housing (6), wherein the leg spring (2) is connected at its end regions to the respective element and the turns extend around a spring axis (x) and are able to be subjected to load by rotation about the spring axis (x), wherein, in the unloaded state of the leg spring (2), the turn diameter of the individual turns (21) varies at least sectionally in the direction of the spring axis (x), wherein, in the loaded and unloaded states of the leg spring (2), there is a gap (62) between the individual turns (21), and wherein provision is made of cylindrically formed centring turns (22) in centring regions (30a, 30b) of the rotary armature (4) and housing (6), wherein the centring turns (22) are situated in the end regions (3a, 3b) of the leg spring (2) and, in terms of their diameter, are matched to the diameter of the regions of the rotary armature (4), at one side, and the housing (6), at the other side, that receive said centring turns (22), and are in abutment here.

2. Rotary solenoid (1) according to Claim 1, wherein, in the unloaded state of the leg spring (2), the turn diameter of the middle region (24), which is arranged between the end regions (3a, 3b) of the leg spring (2), is at least sectionally different from the diameter of the turn (21) or turns (21) in at least one end region (3a, 3b).

3. Rotary solenoid (1) according to either of the preceding claims, wherein the leg spring (2) has a substantially symmetrical construction in relation to the length of the leg spring (2), wherein the turns (21) with the greatest or smallest turn diameter are situated in the region of an axis of symmetry.

4. Rotary solenoid (1) according to one of the preceding claims, wherein, in the at least one end region (3a, 3b) and/or in the middle region (24) of the leg spring (2), provision is made of at least one turn (21) with constant diameter.

5. Rotary solenoid (1) according to one of the preceding claims, wherein the turn diameter varies continuously in the middle region (24) of the leg spring (2).

6. Rotary solenoid (1) according to one of the preceding claims, wherein the end region (3a, 3b) of the leg spring (2) forms, has or carries a connecting element for connection of the leg spring (2) to the rotary armature (4) and to the housing (6), which connection is at least a fixed connection in terms of force or moment.

7. Rotary solenoid (1) according to Claim 6, wherein the connecting element is formed by a bent portion of the material forming the leg spring (2) that points substantially in the direction of the spring axis.

8. Rotary solenoid (1) according to either of Claims 6 and 7, wherein the connecting element is formed by a bent portion of the material forming the leg spring that extends radially in relation to the direction of the spring axis or obliquely.

9. Rotary solenoid (1) according to one of the preceding claims, wherein the leg spring (2) is formed from spring wire or spring strip material with unchanging material diameter or material cross section.

10. Rotary solenoid (1) according to one of the preceding claims, wherein, in the middle region (24) of the leg spring (2), the turn diameter increases or decreases in the direction of the spring axis.

11. Rotary solenoid (1) according to one of the preceding claims, wherein, in the middle region (24) of the leg spring (2), the turn diameter increases in a first section and decreases in a second section in the direction of the spring axis.

## Revendications

1. Aimant rotatif (1) à commande électromagnétique, constitué d'un induit rotatif (4) monté de manière rotative autour d'un axe de rotation (X) et d'un corps de bobine (51) agencé de manière fixe dans l'aimant rotatif (1), portant une pluralité d'enroulements (52) pouvant être alimentés en courant électrique, l'induit rotatif (4) étant logé de manière rotative par rapport au corps de bobine (51) dans un boîtier (6) recevant le corps de bobine (51) ainsi que l'induit rotatif (4), l'induit rotatif (4) étant tourné contre le couple de rappel d'un ressort à branches (2) lors de l'alimentation en courant ; le ressort à branches (2) étant réalisé sous forme de moyen de rappel entre deux éléments pouvant tourner l'un par rapport à l'autre autour d'un axe de rotation, à savoir l'induit rotatif (4) et le boîtier (6), le ressort à branches (2) étant relié dans ses zones d'extrémité à l'élément respectif et les enroulements s'étendant autour d'un axe de ressort (x) et pouvant être sollicités par une rotation autour de l'axe de ressort (x), le diamètre d'enroulement des enroulements individuels (21) variant au moins par sections en direction de l'axe de ressort (x) à l'état non sollicité du ressort à branches (2), une fente (62) existant entre les enroulements individuels (21) à l'état sollicité et à l'état non sollicité du ressort à branches (2), et des enroulements de centrage (22) réalisés sous forme cylindrique étant prévus dans des zones de centrage (30a, 30b) de l'induit rotatif (4) ou du boîtier (6), les enroulements de centrage (22) se trouvant dans les zones d'extrémité (3a, 3b) du ressort à branches (2) et leur diamètre étant adapté au diamètre des zones recevant ces enroulements de centrage (22) d'une part de l'induit rotatif (4) et d'autre part du boîtier (6) et s'y appliquant.

2. Aimant rotatif (1) selon la revendication 1, le diamètre d'enroulement de la zone centrale (24) agencée entre les zones d'extrémité (3a, b) du ressort à branches (2) à l'état non sollicité du ressort à branches (2) étant différent, au moins par sections, du diamètre de l'enroulement (21) ou des enroulements (21) dans au moins une zone d'extrémité (3a, b).

3. Aimant rotatif (1) selon l'une quelconque des revendications précédentes, le ressort à branches (2) présentant une structure essentiellement symétrique par rapport à la longueur du ressort à branches (2), les enroulements (21) ayant le plus grand ou le plus petit diamètre d'enroulement se trouvant dans la zone d'un axe de symétrie.

4. Aimant rotatif (1) selon l'une quelconque des revendications précédentes, au moins un enroulement (21) de diamètre constant étant prévu dans au moins une zone d'extrémité (3a, b) et/ou dans la zone centrale (24) du ressort à branches (2).

5. Aimant rotatif (1) selon l'une quelconque des revendications précédentes, le diamètre d'enroulement variant en continu dans la zone centrale (24) du ressort à branches (2).

6. Aimant rotatif (1) selon l'une quelconque des revendications précédentes, la zone d'extrémité (3a, b) du ressort à branches (2) formant, présentant ou portant un élément de liaison pour relier le ressort à branches (2) à l'induit rotatif (4) et au boîtier (6) au moins par adhérence ou par couple.

7. Aimant rotatif (1) selon la revendication 6, l'élément de liaison étant formé par un coude du matériau formant le ressort à branches (2), orienté essentiellement en direction de l'axe de ressort.

8. Aimant rotatif (1) selon l'une quelconque des revendications 6 ou 7, l'élément de liaison étant formé par un coude du matériau formant le ressort à branches qui s'étend radialement par rapport à la direction de l'axe de ressort ou de manière oblique.

9. Aimant rotatif (1) selon l'une quelconque des revendications précédentes, le ressort à branches (2) étant formé d'un fil à ressort ou d'une bande de matériau à ressort de diamètre de matériau ou de section transversale de matériau constant.

10. Aimant rotatif (1) selon l'une quelconque des revendications précédentes, le diamètre d'enroulement augmentant ou diminuant dans la zone centrale (24) du ressort à branches (2) en direction de l'axe de ressort.

11. Aimant rotatif (1) selon l'une quelconque des revendications précédentes, le diamètre d'enroulement augmentant dans une première section et diminuant dans une deuxième section dans la zone centrale (24) du ressort à branches (2) en direction de l'axe de ressort.
